# EUROPÄISCHE PATENTSCHRIFT

(11) **EP 1 340 030 B1**
(45) Veröffentlichungstag und Bekanntmachung des Hinweises auf die Patenterteilung: **15.11.2006**
(21) Anmeldenummer: 01997669.5
(22) Anmeldetag: 13.11.2001
(51) Int. Cl.: F25D 23/06, B29C 44/38, B29C 45/00

(54) **WÄRMEISOLIERENDES GEHÄUSE FÜR EIN KÄLTEGERÄT**
THERMALLY INSULATING HOUSING FOR A COOLING DEVICE
ENVELOPPE THERMO-ISOLANTE POUR APPAREIL FRIGORIFIQUE

(30) Priorität: 24.11.2000 DE 10058401
(43) Veröffentlichungstag der Anmeldung: 03.09.2003
(73) Patentinhaber: BSH Bosch und Siemens Hausgeräte GmbH, 81739 München (DE)
(72) Erfinder: SÖLL, Joachim, 73447 Oberkochen (DE)
(86) Internationale Anmeldenummer: PCT/EP2001/013122
(87) Internationale Veröffentlichungsnummer: WO 2002/042699

(56) Entgegenhaltungen:
- EP-A- 0 289 764
- BE-A- 718 298
- DE-A- 1 901 386
- DE-A- 4 439 349
- DE-A- 19 825 980
- US-A- 3 265 783
- PATENT ABSTRACTS OF JAPAN vol. 1996, no. 01, 31. Januar 1996 (1996-01-31) & JP 07 232388 A (TOSHIBA CORP), 5. September 1995 (1995-09-05)

## Beschreibung

Die Erfindung betrifft ein wärmeisolierendes Gehäuse für ein Kältegerät mit einer inneren und äußeren Deckschicht sowie einer zwischen den Deckschichten in flüssigen Ausgangskomponenten eingebrachten Wärmeisolationsschicht, die über wenigstens eine Eintragsöffnung zwischen die Deckschichten einbringbar ist, wobei die Eintragsöffnung zumindest im Nahbereich eines zur Aufnahme eines Kältemittelverdichters dienenden Maschinenraums vorgesehen ist.

Ein solches Gehäuse ist aus DE 198 25980 bekannt.

Bei Kühlgeräten ist es Stand der Technik, das zu ihrer Wärmeisolierung dienende Wärmeisolationsmaterial in flüssigen Ausgangskomponenten zwischen eine Innen- und eine Außenverkleidung einzubringen. Die Einbringung des flüssigen Wärmeisolationsmaterials erfolgt insbesondere bei großvolumigen Kühlgeräten, wie Standkühlgeräten und Standgefriergeräten sowie Gefrierkombinationen über eine Eintragsöffnung, die häufig in einer sogenannten Bodenwanne eingebracht ist, die einen zur Aufnahme des Kältemittelverdichters dienenden Maschinenraums auskleidet. Durch eine derartige Anordnung der Eintragungsöffnung soll erreicht werden, dass das zum Zeitpunkt seiner Eintragung in flüssigem Ausgangszustand vorliegende und mit hoher Geschwindigkeit über die Eintragsöffnung in den durch die Außenverkleidung und die Innenverkleidung erzeugten Zwischenraum eingebrachte Wärmeisolationsmaterial nahezu gleichmäßig den Zwischenraum über die gesamte Gehäusehöhe ausfüllt. Bei diesem an sich fertigungstechnisch vorteilhaften schnellen Vorgang, bei dem sich das Gehäusegerippe, bestehend aus einer Außenverkleidung und einer das Kältefach oder die Kältefächer umgrenzenden, spanlos geformten Kunststoffinnenverkleidung, in der sogenannten "Wannenlage" befindet, das heißt, dass das Gehäuseskelett mit seiner Rückwand auf dem Schäumwerkzeug aufliegt, hat sich jedoch gezeigt, dass insbesondere bei großvolumigen Gehäusen der maschinenraumnahe Abschnitt ungleichmäßig mit Wärmeisolationsmaterial befüllt ist. Dadurch ist eine das Wärmeisolationsvermögen des Gehäuses herabsetzende Lunkerbildung innerhalb des Wärmeisolationsmateriales nicht zu vermeiden. Eine solche Lunkerbildung ist insbesondere dann nachteilig, wenn zumindest ein Abschnitt innerhalb des wärmeisolierenden Gehäuses als Gefrierfach ausgebildet ist.

Der Erfindung liegt die Aufgabe zugrunde, bei einem wärmeisolierenden Gehäuse gemäß dem Oberbegriff des Anspruches 1 mit einfachen konstruktiven Maßnahmen die Nachteile des Standes der Technik zu vermeiden.

Diese Aufgabe wird gemäß der Erfindung dadurch gelöst, dass zumindest im Nahbereich der Eintragsöffnung Mittel vorgesehen sind, die das in flüssigen Ausgangskomponenten eingetragene Wärmeisolationsmaterial mengenmäßig aufteilen.

Durch die Teilungsmittel an sich und deren Anordnung im Nahbereich der Eintragsöffnung wird nicht nur eine sehr vergleichmäßigte Verteilung der flüssigen Wärmeisolationsmasse innerhalb des zu befüllenden Zwischenraumes erreicht, sondern insbesondere darüber hinaus sichergestellt, dass trotz der zum Befüllen der oberen Gehäuseabschnitte mit Wärmeisolationsmaterial notwendigen hohen Eintragungsgeschwindigkeit des flüssigen Wärmeisolationsmaterials auch der eintragsöffnungsnahe und der zur Eintragsöffnung benachbarte Bereich bei Kältegerätgehäusen großer Höhe wie beispielsweise Standkühlschränke, Standgefrierschränke oder Kühl- und Gefrierkombinationen, lunkerfrei mit Wärmeisolationsmaterial befüllt wird. Bei Kühl- und Gefrierkombinationen mit untenliegendem Gefrierfach, sogenannte "bottom-freezer" ist diese wärmeisolationstechnisch und somit energietechnisch sehr günstig. Darüber hinaus wird bei dem letztgenannten Gerätetyp auch sichergestellt, dass die die einzelnen Kältefächer voneinander wärmeisolierend trennenden Zwischenwände lunkerfrei mit Wärmeisolationsmaterial ausgefüllt werden. Durch die mit hoher Fertigungssicherheit erreichte lunkerfreie Befüllung aller Gehäuseabschnitte verbessert sich das Wärmeisolationsvermögen der wärmeisolierenden Gehäuse, wodurch die Energieaufnahme des Kältegerätes nicht unwesentlich herabgesetzt wird. Zudem ist durch die Verteilungsmittel die Strömungsgeschwindigkeit des über die Eintragungsöffnung einströmenden Wärmeisolationsmaterials zumindest bereichsweise bezogen auf das Gerätegehäuse derart vermindert, dass im oberen Bereich des Gehäuses auf Abdichtmaßnahmen zur Vermeidung von Schaumaustritt verzichtet werden kann. Dieser Vorteil hat eine nicht unerhebliche Arbeitsersparnis und damit eine spürbare Kostenreduzierung bei der Herstellung der Kältegerätegehäuse zur Folge.

Nach einer bevorzugten Ausführungsform des Gegenstandes der Erfindung ist vorgesehen, dass die Mittel zur Aufteilung des Wärmeisolationsmaterials als Prallwand ausgebildet sind, die das strömende Wärmeisolationsmaterial im Nahbereich der Eintragsöffnung zumindest partiell anstaut.

Durch den Einsatz einer zumindest bereichsweise zur Hemmung des strömenden Wärmeisolationsmaterials dienenden Prallwand ist auf einfache und kostengünstige Weise eine zur lunkerfreien Befüllung des Zwischenraumes notwendige Verteilung des einströmenden Wärmeisolationsmaterials erreicht. Darüber hinaus lässt sich eine als Bremse für das einströmende Wärmeisolationsmaterial dienende Prallwand auf einfache Weise an die Gegebenheiten verschiedener Gehäusekonfigurationen zur Erreichung einer lunkerfreien Befüllung mit Wärmeisolationsmaterial anpassen. Die Prallwand kann zu einer Herbeiführung einer Anstauung und damit Verteilung des einströmenden Wärmeisolationsmaterials vollflächig oder gitter- bzw. netzartig aufgebaut sein, wobei die Gitter- bzw. Netzöffnungen derart bemessen sein müssen, dass eine Stauwirkung an der Prallwand auftritt und damit das einströmende Wärmeisolationsmaterial an dieser gebremst wird und somit lufteinschlussfrei und damit ohne Lunker der Zwischenraum zwischen der Innenverkleidung und der Außenverkleidung mit Wärmeisolationsmaterial befüllt ist.

Eine besonders wirkungsvolle Aufteilung des einströmenden flüssigen Wärmeisolationsmaterials wird erreicht, wenn nach einer nächsten vorteilhaften Ausgestaltung des Gegenstandes der Erfindung vorgesehen ist, dass die Prallwand vollflächig ausgebildet ist.

Besonders günstig im Hinblick auf die Vermeidung von Wärmebrücken ausgebildet ist die Prallwand, wenn nach einer alternativen Ausführungsform des Gegenstandes der Erfindung vorgesehen ist, dass die Prallwand netz- oder gitterähnlich ausgebildet ist.

Fertigungstechnisch besonders einfach und damit kostengünstig herstellbar ist eine Prallwand, wenn nach einer nächsten vorteilhaften Ausführungsform des Gegenstandes der Erfindung vorgesehen ist, dass die Prallwand als Flachprofil ausgebildet ist.

Besonders sicher lunkerfrei verteilt sich das einströmende Wärmeisolationsmaterial über die gesamte Gerätehöhe, aber insbesondere im Einströmbereich des Wärmeisolationsmaterials in den Zwischenraum und damit im vorliegenden Fall im Bereich des Maschinenraums und somit des Gehäusebodens, wenn nach einer weiteren bevorzugten Ausführungsform des Gegenstandes der Erfindung vorgesehen ist, dass das Flachprofil unmittelbar im Anschluss an die Eintragsöffnung angeordnet ist.

Gemäß einer nächsten bevorzugten Ausführungsform des Gegenstandes der Erfindung ist vorgesehen, dass das Flachprofil am Bodenabschnitt der äußeren Deckschicht, zumindest im Nahbereich der Eintragsöffnung festgesetzt und gekrümmt zur inneren Deckschicht hin verläuft.

Durch eine derartige Positionierung und Befestigung des Flachprofiles ist die Möglichkeit eröffnet, das Flachprofil im Zuge einer Vormontage an einer aus Kunststoffspritzguss hergestellten separaten Bodenwanne, die den Bodenabschnitt der äußeren Deckschicht bildet, anzubringen. Durch die Möglichkeit der Vormontage kann das Flachprofil auch bereits von einem Zulieferanten der Bodenwanne an dieser befestigt werden, wodurch sich der Fertigungsablauf des wärmeisolierenden Gehäuses kostengünstig vereinfacht.

Nach einer weiteren bevorzugten Ausführung des Gegenstandes der Erfindung ist vorgesehen, dass das Flachprofil streifenartig ausgebildet ist und sich von der Eintragsöffnung über zumindest annähernd ein Viertel der Gehäusehöhe erstreckt.

Eine derartige Ausbildung und Anordnung des Flachprofiles hat bereits gute Ergebnisse hinsichtlich einer gleichmäßigen Schaumverteilung innerhalb des Zwischenraumes zwischen den beiden Deckschichten ergeben. Darüber hinaus ist ein streifenartig ausgebildetes Flachprofil fertigungstechnisch besonders einfach handhabbar.

Als besonders günstig im Hinblick auf seine Temperaturbeständigkeit einerseits und seine Formbeständigkeit andererseits hat sich als Werkstoff für das Flachprofil herausgestellt, wenn nach einer nächsten vorteilhaften Ausführungsform des Gegenstandes der Erfindung vorgesehen ist, dass das Flachprofil aus Polypropylen gebildet ist.

Gemäß einer letzten bevorzugten Ausführungsform des Gegenstandes der Erfindung ist vorgesehen, dass das Flachprofil als Halbzeug ausgebildet ist, dessen Breite zumindest annähernd dem Durchmesser der kreisförmigen Eintragsöffnung entspricht.

Die Bereitstellung des Flachprofiles als Halbzeug stellt eine besonders kostengünstige Variante dar.

Die Erfindung ist in der nachfolgenden Beschreibung anhand einer in der beigefügten Zeichnung vereinfachten dargestellten Kühl- und Gefrierkombination erläutert.

Es zeigen:
- Figur 1: in vereinfachter schematischer Darstellung eine Kühl- und Gefrierkombination mit einer einen Maschinenraum freisparenden Bodenwanne, in der eine Eintragsöffnung mit daran festgesetzter Prallwand angeordnet ist, in Schnittdarstellung von der Seite und
- Figur 2: ausschnittsweise die Kühl- und Gefrierkombination gemäß Figur 1 ohne ihren rückwärtigen Außenverkleidungsabschnitt, in Rückansicht.

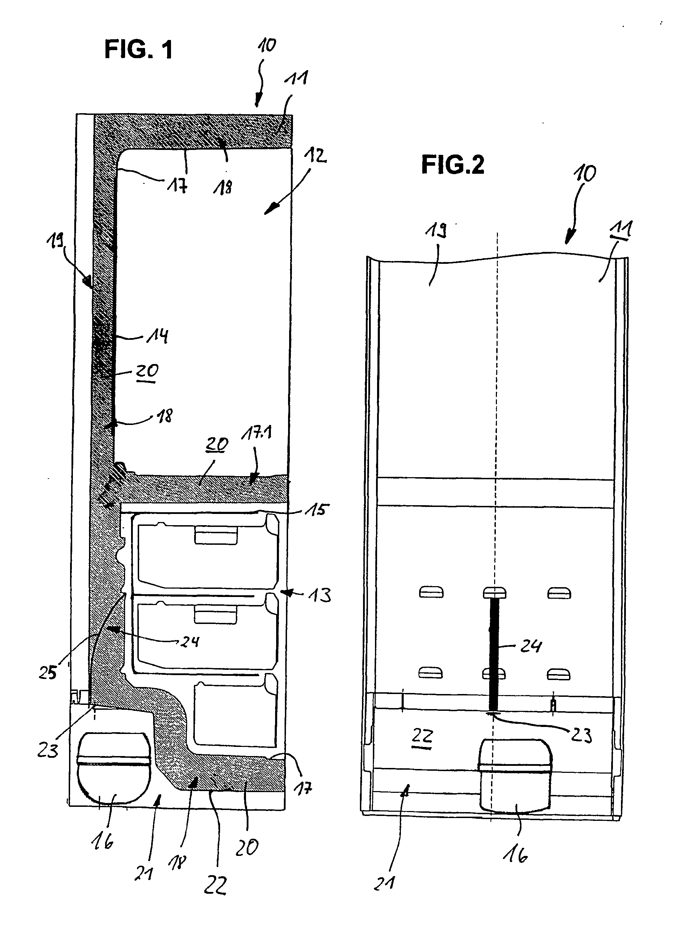

Gemäß Figur 1 ist eine Kühl- und Gefrierkombination 10 mit einem wärmeisolierend ausgebildeten Gehäuse 11 gezeigt, innerhalb dem ein Kühlfach 12 und ein unterhalb diesem angeordnetes Gefrierfach 13 vorgesehen ist. Sowohl das Kühlfach 12 als auch das Gefrierfach 13 ist jeweils von einem Verdampfer gekühlt, wobei der zur Kühlung des Kühlfaches 12 dienende Verdampfer als sogenannter Coldwall-Verdampfer 14 und der zur Aufrechterhaltung der bestimmungsgemäßen Temperatur im Gefrierfach 13 vorgesehene Verdampfer als mehrere Verdampferebenen aufweisender Drahtrohrverdampfer 15 ausgebildet ist, der wie der Coldwall-Verdampfer 14 von einem Kältemittelverdichter 16 mit flüssigem Kältemittel beaufschlagt wird. Zur Auskleidung des Kühlfaches 12 sowie des Gefrierfaches 13 ist eine durch spanlose Formgebung eine Kunststoffplatine erzeugte, als innere Deckschicht dienende Innenverkleidung 17 vorgesehen, welche im vorliegenden Fall einstückig über beide Kältefächer 12 und 13 verläuft. Zwischen den für das Kühlfach 12 bzw. das Gefrierfach 13 auskleidenden Abschnitten ist Zwischensteg 17.1 erzeugt, der mit weiter unten genauer erläutertem Wärmeisolationsmaterial zur wärmeisolierenden Trennung der beiden Kältefächer 12 und 13 verfüllt ist. Im Abstand zur Innenverkleidung 17 besitzt das wärmeisolierende Gehäuse 11 eine zusammen mit der Innenverkleidung 17 einen Zwischenraum 18 umgrenzende Außenverkleidung 19 die als äußere Deckschicht dient. Diese ist mit der Innenverkleidung 17 anhand eines lunkerfrei in den auch den Zwischensteg 17.1 umfassenden Zwischenraum 18 eingebrachten und adhäsiv wirkenden Wärmeisolationsmaterials 20 zu einem formsteifen Gebilde verbunden. Die als äußere Deckschicht dienende Außenverkleidung 19 umfasst einen nicht näher bezeichneten Deckenabschnitt, zwei aus vorgeformten Stahlblechwänden gefertigte Seitenwände, eine aus Pappkarton gebildete Rückwand sowie eine einen Maschinenraum 21 für den Kältemittelverdichter 16 bildende Bodenwanne 22, die den bodenseitigen Abschluss des wärmeisolierenden Gehäuses 11 darstellt.

Wie sowohl aus Figur 1 als auch aus Figur 2 hervorgeht, weist die Bodenwanne 22 eine zumindest mittig zu ihrer Breite sitzende, kreisförmig ausgebildete Eintragsöffnung 23 auf, die im Nahbereich der durch den Pappkarton gebildeten Rückwand der Außenverkleidung 19 vorgesehen ist und im Zwischenraum 18 endet. Unmittelbar an der Mündungsseite der Eintragsöffnung 23 ist eine streifenartig ausgebildete im vorliegenden Fall als Flachprofil 24 ausgeführte Prallwand festgesetzt, die von der wärmeisolationsseitigen Innenseite des als Rückwand dienenden Pappkartons unter Bildung einer Krümmung 25 innerhalb des Zwischenraumes 18 hin zu dem das Gefrierfach 13 auskleidenden Abschnitt der Innenverkleidung 17 verläuft und dort wärmeisolationsseitig im oberen Drittel der Innenverkleidung 17 festgesetzt ist.

Das Flachprofil 24 dient zur Erzeugung eines gewissen Rückstaues des in flüssigen Ausgangskomponenten über die Eintragsöffnung 23 in den Zwischenraum 18 eingetragenen Wärmeisolationsmaterials 20 im Nahbereich der Bodenwanne 22 und wirkt somit als zur gleichmäßigen Verteilung des Wärmeisolationsmateriales 20 dienende Bremse des mit relativ hoher Strömungsgeschwindigkeit in den Zwischenraum 18 einströmenden Wärmeisolationsmaterials 20. Durch die Anordnung und Positionierung des Flachprofils 20 zur Eintragsöffnung 23 ist eine lunkerfreie Verteilung des einströmenden Wärmeisolationsmateriales 20 innerhalb des gesamten Zwischenraumes 18 also sowohl im deckennahen Bereich des Gehäuses 11 als auch im Bereich des die beiden Kältefächer voneinander wärmeisolierend trennenden Zwischensteges 17.1, aber vor allem auch im bodennahen Bereich und im unteren Drittel des Gehäuses 11 erreicht.

## Patentansprüche

1. Wärmeisolierendes Gehäuse für ein Kältegerät mit einer inneren (17) und äußeren (19) Deckschicht sowie einer zwischen den Deckschichten in flüssigen Ausgangskomponenten eingebrachten Wärmeisolationsschicht, die über wenigstens eine Eintragsöffnung (23) zwischen die Deckschichten einbringbar ist, wobei die Eintragsöffnung (23) im Nahbereich eines zur Aufnahme eines Kältemittelverdichters (16) oder dergleichen dienenden Maschinenraumes vorgesehen ist, **dadurch gekennzeichnet, dass** zumindest im Nahbereich der Eintragsöffnung (23) Mittel (24) vorgesehen sind, die das in flüssigen Ausgangskomponenten eingetragene Wärmeisolationsmaterial (20) mengenmäßig aufteilen.

2. Wärmeisolierendes Gehäuse nach Anspruch 1, **dadurch gekennzeichnet, dass** die Mittel als Prallwand ausgebildet sind, die das zwischen die Deckschichten (17, 19) einströmende Wärmeisolationsmaterial (20) zumindest im Nahbereich der Eintragsöffnung (23) partiell anstaut.

3. Wärmeisolierendes Gehäuse nach Anspruch 2, **dadurch gekennzeichnet, dass** die Prallwand vollflächig ausgebildet ist.

4. Wärmeisolierendes Gehäuse nach Anspruch 2, **dadurch gekennzeichnet, dass** die Prallwand netz- oder gitterähnlich ausgebildet ist.

5. Wärmeisolierendes Gehäuse nach einem der Ansprüche 2 bis 4, **dadurch gekennzeichnet, dass** die Prallwand als Flachprofil (24) ausgebildet ist.

6. Wärmeisolierendes Gehäuse nach Anspruch 5, **dadurch gekennzeichnet, dass** das Flachprofil (24) unmittelbar im Anschluss an die Eintragsöffnung (23) angeordnet ist.

7. Wärmeisolierendes Gehäuse nach Anspruch 5 oder 6, **dadurch gekennzeichnet, dass** das Flachprofil (24) am Bodenabschnitt der äußeren Deckschicht (19), zumindest im Nahbereich der Eintragsöffnung (23) festgesetzt ist und gekrümmt zur inneren Deckschicht (17) hin verläuft.

8. Wärmeisolierendes Gehäuse nach Anspruch 5 oder 6, **dadurch gekennzeichnet, dass** das Flachprofil (24) streifenartig ausgebildet ist und sich von der Eintragsöffnung (23) über zumindest annähernd ein Viertel der Gehäusehöhe erstreckt.

9. Wärmeisolierendes Gehäuse nach einem der Ansprüche 5 bis 7, **dadurch gekennzeichnet, dass** das Flachprofil (24) aus Polypropylen gebildet ist.

10. Wärmeisolierendes Gehäuse nach einem der Ansprüche 5 bis 8, **dadurch gekennzeichnet, dass** das Flachprofil (24) als Halbzeug ausgebildet ist, dessen Breite zumindest annähernd dem Durchmesser der kreisförmigen Eintragsöffnung (23) entspricht.

## Claims

1. Thermal insulating housing for a refrigerating appliance with an inner cover layer (17) and outer cover layer (19) as well as a thermal insulation layer, which is introduced between the cover layers in liquid starting components and which can be introduced between the cover layers by way of at least one intake opening (23), wherein the intake opening (23) is provided in the vicinity of a machine space serving for reception of a refrigerant compressor (16) or the like, **characterised in that** means (24) which divide up the thermal insulation material (20), which is introduced in liquid starting components, in terms of quantity are provided in the vicinity of the intake opening (23).

2. Thermal insulating housing according to claim 1, **characterised in that** the means are constructed as a baffle wall which partially backs up the thermal insulation material (20), which is flowing in between the cover layers (17, 19), at least in the vicinity of the intake opening (23).

3. Thermal insulating housing according to claim 2, **characterised in that** the baffle wall is of solid area construction.

4. Thermal insulating housing according to claim 2, **characterised in that** the baffle wall is of reticular or grid-like construction.

5. Thermal insulating housing according to one of claims 2 to 4, **characterised in that** the baffle wall is constructed as a flat profile member (24).

6. Thermal insulating housing according to claim 5, **characterised in that** the flat profile member (24) is arranged in direct connection with the intake opening (23).

7. Thermal insulating housing according to claim 5 or 6, **characterised in that** the flat profile member (24) is fixed at the base section of the outer cover (19) at least in the vicinity of the intake opening (23) and extends with curvature towards the inner cover layer (17).

8. Thermal insulating housing according to claim 5 or 6, **characterised in that** the flat profile member (24) is of strip-like construction and extends from the intake opening (23) over at least approximately a quarter of the housing height.

9. Thermal insulating housing according to one of claims 5 to 7, **characterised in that** the flat profile member (24) is formed from polypropylene.

10. Thermal insulating housing according to one of claims 5 to 8, **characterised in that** the flat profile member (24) is constructed as a semi-finished product, the width of which corresponds at least approximately with the diameter of the circular intake opening (23).

## Revendications

1. Corps calorifuge pour un appareil frigorifique avec une couche de recouvrement interne (17) et externe (19) ainsi qu'une couche calorifuge insérée en composants de base liquides entre les couches de recouvrement, qui peut être insérée par l'intermédiaire d'au moins une ouverture d'entrée (23) entre les couches de recouvrement, l'ouverture d'entrée (23) étant prévue dans une zone proche d'un espace de machine servant à recevoir un compresseur de fluide frigorigène (16) ou similaire, **caractérisé en ce que** au moins dans une zone proche de l'ouverture d'entrée (23) sont prévus des moyens (24) qui divisent quantitativement le matériau d'isolation thermique (20) introduit en composants de base liquides.

2. Corps calorifuge selon la revendication 1, **caractérisé en ce que** les moyens sont conçus comme une paroi de rebondissement qui refoule au moins partiellement le matériau d'isolation thermique pénétrant (20) entre les couches de recouvrement (17, 19) au moins dans une zone proche de l'ouverture d'entrée (23).

3. Corps calorifuge selon la revendication 2, **caractérisé en ce que** la paroi de rebondissement est conçue sur toute la surface .

4. Corps calorifuge selon la revendication 2, **caractérisé en ce que** la paroi de rebondissement est conçue de façon semblable à un treillis ou une grille.

5. Corps calorifuge selon l'une des revendications 2 à 4, **caractérisé en ce que** la paroi de rebondissement est conçue sous forme d'un profil plat (24).

6. Corps calorifuge selon la revendication 5, **caractérisé en ce que** le profil plat (24) est disposé directement en étant raccordé à l'ouverture d'entrée (23).

7. Corps calorifuge selon la revendication 5 ou 6, **caractérisé en ce que** le profil plat (24) est fixé sur la section de fond de la couche de recouvrement externe (19) au moins dans une zone proche de l'ouverture d'entrée (23) et passe en étant recourbé vers la couche de recouvrement interne (17).

8. Corps calorifuge selon la revendication 5 ou 6, **caractérisé en ce que** le profil plat (24) est conçu sous forme de bandes et s'étend de l'ouverture d'entrée (23) sur au moins un quart environ de la hauteur du corps.

9. Corps calorifuge selon l'une des revendications 5 à 7, **caractérisé en ce que** le profil plat (24) est formé de polypropylène.

10. Corps calorifuge selon l'une des revendications 5 à 8, **caractérisé en ce que** le profil plat (24) est conçu en tant que produit semi-fini dont la largeur correspond au moins approximativement au diamètre de l'ouverture d'entrée en forme de cercle (23).
